# FASCICULE DE BREVET EUROPEEN

(11) **EP 2 233 368 B1**
(45) Date de publication et mention de la délivrance du brevet: **09.03.2011**
(21) Numéro de dépôt: 09306311.3
(22) Date de dépôt: 22.12.2009
(51) Int. Cl.: B60R 19/12, B62D 25/08

(54) **Ensemble avant de véhicule automobile comprenant un bouclier pare-chocs avant**
Frontteil eines Kraftfahrzeuges, dass eine Frontstossstangenabdeckung umfasst
Front assembly of an automobile comprising a front bumper shield

(30) Priorité: 26.03.2009 FR 0901438
(43) Date de publication de la demande: 29.09.2010
(73) Titulaire: Faurecia Bloc Avant, 92000 Nanterre (FR)
(72) Inventeur: Gonin, Vincent, 25600, SOCHAUX (FR); Dufee, Julien, 90340, NOVILLARD (FR); Droz Bartholet, Laurent, 70400, HERICOURT (FR)
(74) Mandataire: Domenego, Bertrand

(56) Documents cités:
- EP-A- 1 000 840
- EP-A- 1 419 936
- EP-A- 1 698 520
- DE-A1-102006 041 095

## Description

La présente invention concerne un ensemble avant de véhicule automobile, de type comprenant au moins deux paires de longerons avant d'un châssis d'un véhicule automobile et des platines d'appui et de fixation disposées aux extrémités avant des longerons.

Les véhicules automobiles modernes sont conçus pour répondre de façon convenable à différents types de chocs frontaux possibles, tel que les chocs à petite vitesse ou « chocs parking », pour une vitesse comprise entre 2,5 et 4 km/h (ECE42), les chocs à moyenne vitesse ou « chocs réparablilité », pour une vitesse d'environ 16 km/h (Danner) et les chocs à grandes vitesse, pour une vitesse comprise entre 56 et 65 km/h.

Les véhicules automobiles modernes sont également conçus pour protéger les piétons en cas de choc piéton, et en particulier pour protéger les jambes et la hanche du piéton.

Il est possible de prévoir un ensemble avant comprenant une poutre pare-chocs supérieure métallique fixée aux extrémités de longerons supérieurs avant d'une voie haute (brancards principaux) par l'intermédiaire de premiers absorbeurs de chocs métalliques rapportés sur la poutre pare-chocs supérieure, et une poutre pare-chocs inférieure fixée aux extrémités de longerons inférieurs avant d'une voie basse (prolonges de berceau) par l'intermédiaire de second absorbeurs de chocs métalliques ou en matière plastique, rapportés sur la poutre pare-chocs inférieure.

Néanmoins, un tel ensemble avant est compliqué et coûteux à fabriquer et à installer.

EP 1 698 520 A1, EP 1 419 936 A1 et EP1 000 840 A2 divulguent des ensembles avant comprenant des poutres pare-chocs séparées.

Un but de l'invention est de proposer un ensemble avant permettant de répondre de manière convenable aux chocs piétons et aux chocs à petite et moyenne vitesse, tout en étant simple et en présentant un coût de fabrication faible.

A cet effet, l'invention propose un ensemble avant de véhicule automobile du type précité, caractérisé en ce qu'il comprend un bouclier pare-chocs avant comprenant un cadre monobloc en matière plastique formé d'une poutre pare-chocs supérieure et d'une poutre pare-chocs inférieure et de deux montants reliant les poutres pare-chocs supérieure et inférieure, les montants du cadre étant configurés pour faire office d'absorbeurs de chocs et fixés en appui directement contre les platines.

Selon d'autres modes de réalisation, l'ensemble avant comprend une ou plusieurs des caractéristiques suivantes, prise(s) isolément ou selon toutes les combinaisons techniquement possibles :
- les montants possèdent une épaisseur comprise entre 120 et 220 mm ;
- les montants sont fixés aux platines par vissage et/ou collage ;
- les montants présentent une structure alvéolaire formée d'alvéoles s'étendant longitudinalement au travers des montants et débouchant sur la face arrière et/ou avant du bouclier ;
- chaque montant comprend des premières alvéoles borgnes, fermées du côté de la face arrière et ouvertes du côté de la face avant, et des deuxième alvéoles borgnes ouvertes du côté de la face arrière et fermée du côté de la face avant ;
- la poutre pare-chocs supérieure est double et comprend deux traverses espacées verticalement ;
- chaque paire de longerons comprend un longeron supérieur et un longeron inférieur raccordés entre eux par une platine commune de fixation s'étendant sur toute la hauteur séparant le longeron supérieur du longeron inférieur, chaque montant étant appliqué sur la platine commune suivant sensiblement toute sa hauteur ;
- il comprend au moins une nervure avant d'absorption piéton faisant saillie vers l'avant à partir d'un montant ; et
- une nervure avant d'absorption piéton se prolonge latéralement pour s'appliquer sur l'une de la poutre pare-chocs supérieure et de la poutre pare-chocs inférieure.

L'invention concerne également un bouclier pare-chocs avant pour véhicule automobile comprenant un cadre monobloc formé d'une poutre pare-chocs supérieure et d'une poutre pare-chocs inférieure et de deux montants reliant les poutres pare-chocs supérieure et inférieure, prévu pour être intégré dans un ensemble avant de véhicule automobile selon l'une quelconque des revendications précédentes, les montants du bouclier étant configurés pour faire office d'absorbeurs de chocs et adaptés pour être fixés en appui directement contre les platines.

L'invention et ses avantages seront mieux compris à la lecture de la description qui va suivre, donnée uniquement à titre d'exemple, et faite en référence aux dessins annexés, sur lesquels :
- la figure 1 est une vue schématique en perspective éclatée d'un premier ensemble pare-chocs avant selon l'invention ;
- la figure 2 est une vue en coupe de côté de l'ensemble de la figure 1 ; et

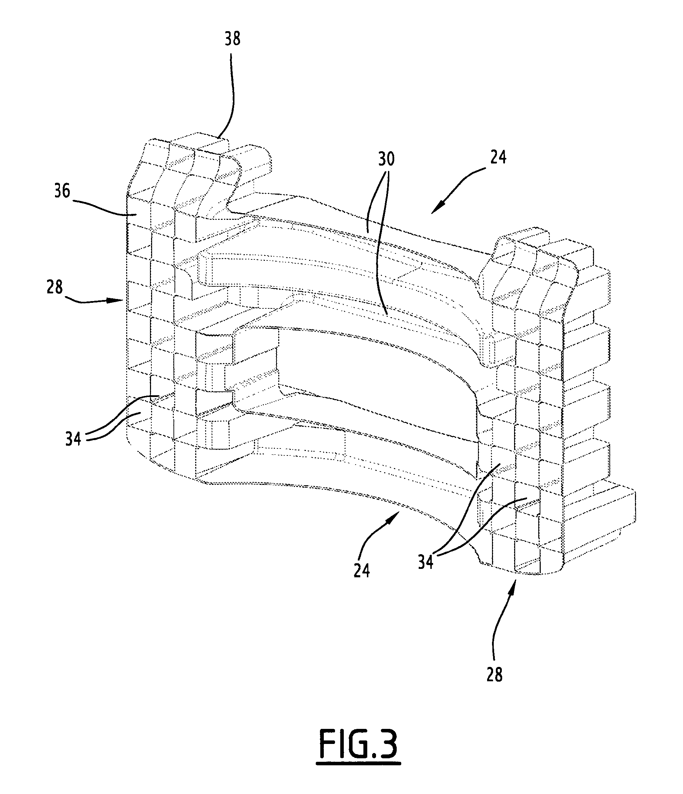

- la figure 3 est une vue en perspective de trois-quarts arrière d'un bouclier pare-chocs avant de l'ensemble des figures 1 et 2 ;
- la figure 4 est une vue analogue à celle de la figure 3 d'un bouclier pare-choc avant selon une variante ; et

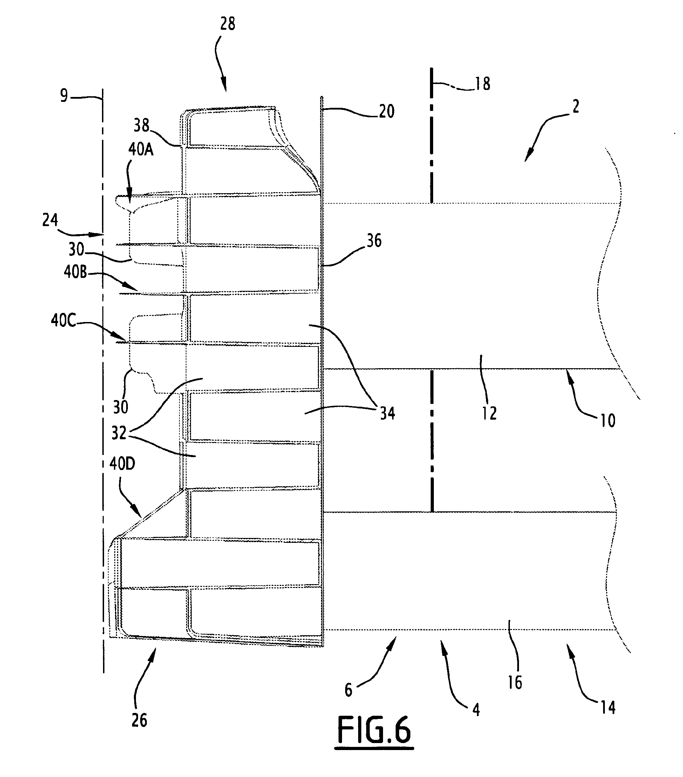

- les figures 5 et 6 sont des vues analogues à celles des figures 1 et 2 d'un deuxième ensemble pare-chocs avant selon l'invention.

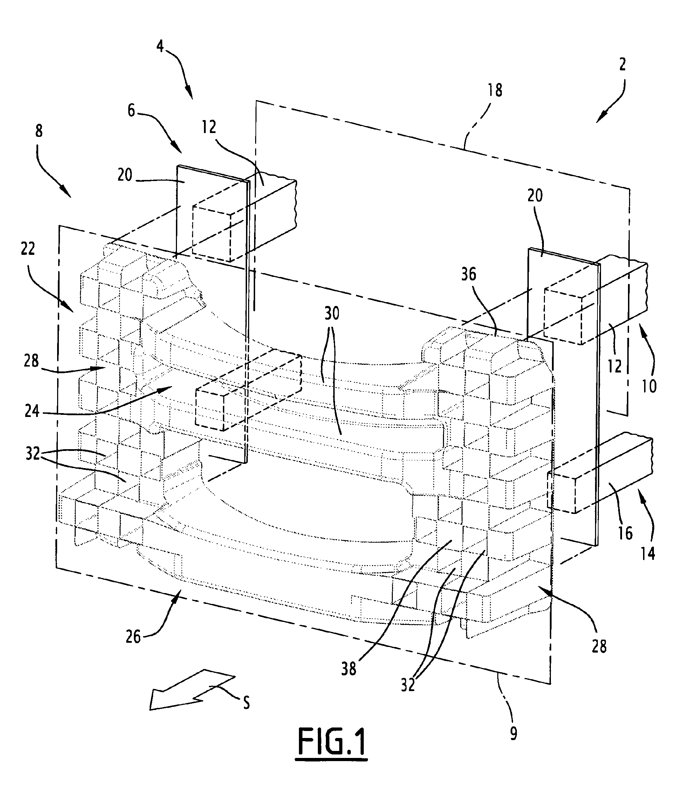

Par la suite, les termes d'orientation s'entendent par référence à l'orientation usuelle des véhicules automobiles, illustrée sur la figure 1 par la flèches S dirigée horizontalement vers l'avant suivant une direction longitudinale du véhicule automobile.

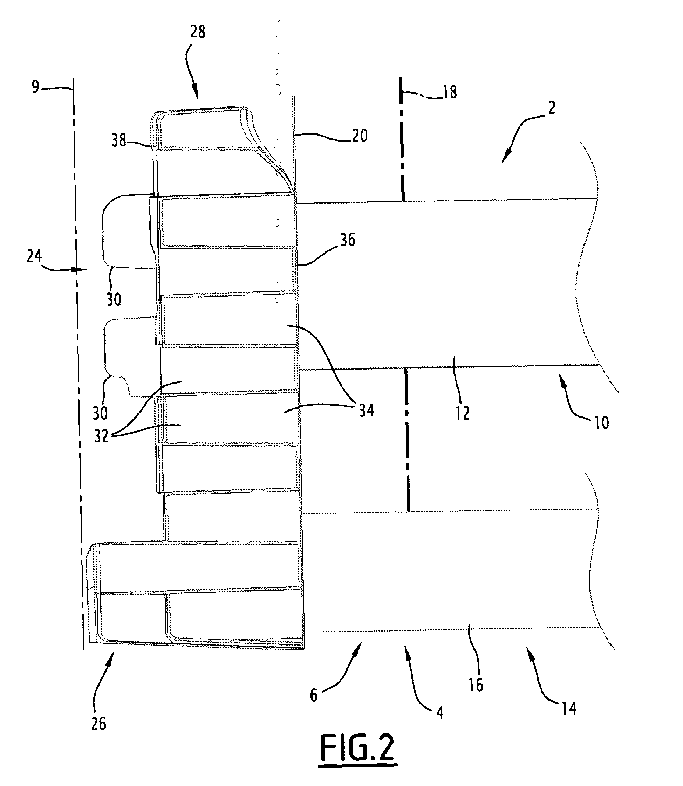

Telle que représentée sur les figures 1 et 2, un véhicule automobile 2 comprend un châssis 4 comprenant une partie avant 6, un bouclier 8 pare-chocs avant disposé à l'extrémité avant de la partie avant 6 pour protéger la partie avant 6 en cas de choc, et une peau 9 de pare-chocs pour recouvrir le bouclier 8.

La partie avant 6 comprend une voie haute 10 comprenant une paire de longerons supérieurs 12, ou brancards, et une voie basse 14 comprenant une paire de longerons inférieurs 16, ou prolonges de berceau.

Les longerons supérieurs 12 s'étendent longitudinalement et sont espacés transversalement l'un de l'autre.

Les longerons inférieurs 16 s'étendent longitudinalement et sont espacés transversalement l'un de l'autre. L'écartement transversal entre les longerons inférieurs 16 est sensiblement égal à celui entre les longerons supérieurs 12.

Les longerons supérieurs 12 sont tarés pour encaisser une force axiale maximale sans flambement comprise entre 80kN et 100kN. Les longerons inférieurs 16 sont tarés pour encaisser une force axiale maximale sans flambement comprise entre 25kN et 45kN. Sur certains véhicules aux gabarits éloignés de la moyenne, les fourchettes de tarage proposées peuvent différer légèrement, sans sortir du cadre de l'invention.

Les longerons supérieurs 12 sont prévus pour recevoir entre eux et supporter au moins en partie une face avant 18. La face avant 18 est représentée sur la figure 1 de façon schématique par un rectangle en traits mixte. De manière connue, la face avant 18 comprend un cadre de support portant des organes fonctionnels d'un système de refroidissement du groupe motopropulseur du véhicule et/ou d'un système de climatisation, tel qu'un ou plusieurs radiateur ou un groupe motoventilateur.

La face avant 18 est fixée aux longerons supérieurs 12 et à des longerons d'aile supportant les ailes de la carrosserie, et situés au-dessus des longerons supérieurs et en retrait vers l'arrière par rapport aux longerons supérieurs 12.

La face avant 18 se situe en retrait vers l'arrière des extrémités avant des longerons supérieur 12 et inférieurs 16.

La partie avant 6 comprend un paire de platines 20 de fixation disposées aux extrémités avant des longerons supérieurs 12 et inférieurs 16. Chaque platine 20 relie l'extrémité avant d'un longerons supérieur 12 à celle du longeron inférieur 16 adjacent situé du même côté. Chaque platine 20 présente la forme d'une plaque métallique s'étendant dans un plan transversal sensiblement vertical. Les platines 20 peuvent être réalisées en acier embouti, roulé, plié, ou encore en alliage léger.

La peau 9 est un élément de carrosserie avant du véhicule et définissant le galbe extérieur du véhicule.

Le bouclier 8 est disposé entre la peau 9, par laquelle il est recouvert, et la partie avant 6. Il a pour fonction d'absorber l'énergie de chocs à petite vitesse et de chocs à moyenne vitesse (Danner) de façon à préserver le châssis 4, et de protéger un piéton en cas de choc piéton.

Le bouclier 8 est disposé aux extrémités avant des longerons supérieurs 12 et inférieurs 16 en étant fixé en appui longitudinal contre les platines 20. Le bouclier 8 est disposé devant la face avant 18 de façon à la protéger, ainsi que les organes fonctionnels qu'elle porte.

Le bouclier 8 comprend un cadre 22 monobloc formé d'une poutre pare-chocs supérieure 24 située à hauteur de la voie haute 10, d'une poutre pare-chocs inférieure 26 située à hauteur de la voie basse 12 et de deux montants 28 reliant les poutres pare-chocs 24, 26 entre elles.

Les poutres pare-chocs 24, 26 s'étendent sensiblement transversalement et horizontalement. Elles sont espacées verticalement l'une de l'autre. Les montants 28 s'étendent sensiblement verticalement entre les poutres pare-chocs 24, 26.

Les poutres pare-chocs 24, 26 ont pour fonction de canaliser l'énergie d'un choc vers les montants 28 en cas de collision. La poutre pare-chocs inférieure 26, ou « poutre pare-chocs piéton », a également pour fonction de protéger la jambe de piéton en cas de choc piéton.

La poutre pare-chocs inférieure 26 est disposée pour venir impacter la jambe d'un piéton en dessous du genou, tandis que la poutre pare-chocs supérieure 26 est prévue pour venir impacter la jambe d'un piéton sensiblement au droit du genou.

L'amplitude verticale de la poutre pare-chocs supérieure 24 est comprise entre 100 mm et 200 mm, de préférence entre 120mm et 150mm, ce qui représente une augmentation de 30% à 80% par rapport à l'amplitude verticale des poutres pare-chocs supérieures métalliques classiques, de hauteur classiquement comprise entre 70mm et 90mm. Il en résulte une meilleure compatibilité avec le genou du piéton (cisaillement réduit), du fait de la moindre sensibilité à une dispersion de l'organisme du piéton (taille du tibia) ou à l'assiette du véhicule (degré de chargement, assiette de freinage). L'avantage est identique en configuration de choc parking ou de choc compatibilité basse vitesse. Avantageusement, la poutre pare-chocs inférieure 26 est plus rigide et avancée par rapport à la poutre pare-chocs supérieure 24 pour assurer une protection convenable au piéton.

Dans cet exemple, la poutre pare-chocs supérieure 24 est double et comprend au moins deux membrures 30 horizontales parallèles espacées verticalement. Chaque membrure 30 possède une section en U ouverte horizontalement vers l'arrière. Les membrures 30 augmentent l'inertie de la poutre pare-chocs supérieure 24 en flexion et en torsion. Elles peuvent présenter des dépouilles et surtout une hauteur suffisante de manière à ce que l'injection et le démoulage du cadre soient facilités (classiquement, hauteur comprise entre 30mm et 40mm). En variante, la poutre pare-chocs supérieure 24 comprend une membrure unique.

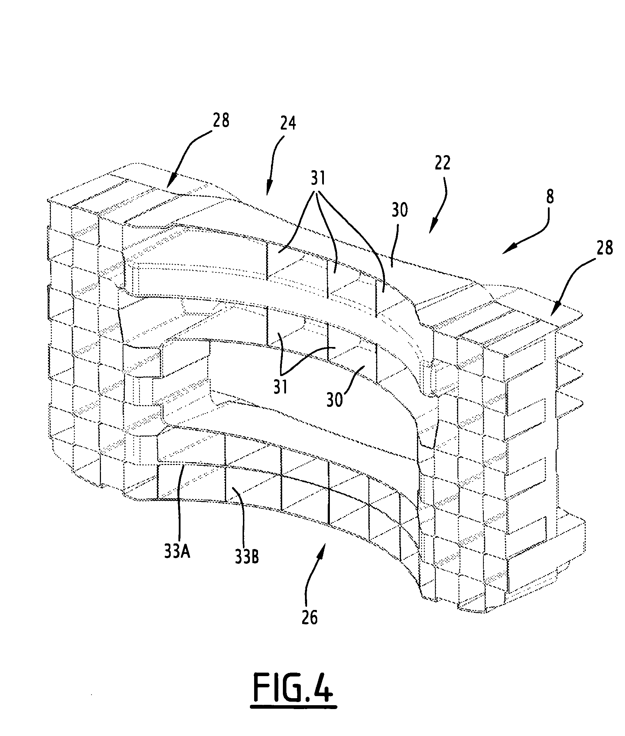

En option, et comme illustré dans la variante de la figure 4, chaque membrure 30 comprend des nervures 31 verticales longitudinales intérieures de rigidification pour conférer à la membrure 30 la rigidité souhaitée. Dans une variante avantageuse, les nervures présentes dans les membrures 30 sont réparties sur la largeur de ces membrures, pour que la densité de nervures par unité de longueur en se déplaçant le long d'un axe transversal du véhicule soit supérieure dans une région centrale de la membrure 30 par rapport à la densité dans les régions latérales de la membrure 30 situées de part et d'autre de la région centrale.

Ainsi, la région centrale s'étend par exemple de part et d'autre du centre de la membrure 30 sur une étendue latérale d'environ 200 mm. Cette région centrale présente par exemple un nombre de nervures supérieures à 4.

La présence d'un nombre élevé de nervures dans cette région centrale permet, en choc piéton centré, après impact de la jambe du piéton sur cette région centrale, une réduction de la décélération par flexion pure des membrures 30 sur une course longitudinale comprise entre 50 mm et 70 mm. Cette réponse est radicalement différente de la réponse d'un absorbeur classique en mousse qui travaille en compression pure sur une course comparable.

Chaque région latérale s'étend entre la région centrale et les montants 28 à une distance comprise par exemple entre 200 mm et 300 mm du centre de la membrure 30. Le nombre de nervures dans chaque région périphérique est inférieur à 4. Ainsi, en choc piéton médian, lorsque la jambe du piéton impacte cette région latérale, la réduction de la décélération se fait par une combinaison de flexion et de compression localisée de cette région sur une course proche de 50 mm.

La poutre pare-chocs inférieure 26 possède une section en U ouverte horizontalement vers l'arrière. La poutre pare-chocs inférieure 26 présente une hauteur supérieure à celle de chacune des membrures 30 de la poutre pare-chocs supérieure 24.

En option, et comme illustré dans la variante de la figure 4, la poutre pare-chocs inférieure 26 comprend des nervures intérieures de rigidification pour conférer à la poutre pare-choc inférieure 24 la rigidité souhaitée comme décrit plus haut. Telle que représentée sur la figure 4, la poutre pare-chocs inférieure 26 comprend une nervure horizontale 33A transversale et des nervures verticales 33B longitudinales.

Les montants 28 du bouclier 8 sont prévus pour faire office d'absorbeur d'énergie entre la peau 9 et les platines 20, et pour absorber l'énergie d'un choc sur le bouclier 8 à petite vitesse ou à moyenne vitesse (Danner).

Ainsi, les montants 28 sont aptes à être fixés directement en appui rigide contre les platines 20, sans interposer des absorbeurs de choc additionnels rapportés entre les montants 28 et les platines 20.

Pour un véhicule automobile dont la masse est comprise entre 800 et 1200 kg, l'énergie à dissiper en cas de choc moyenne vitesse (Danner) est généralement comprise entre 6 et 12 kJ, avantageusement entre 7kJ et 10kJ. De préférence, chaque montant 28 est prévu pour absorber une énergie supérieure à 5 kJ en cas de choc moyenne vitesse (Danner), de préférence comprise entre 6 et 10kJ.

Chaque montant 28 présente une structure alvéolaire comprenant des alvéoles 32, 34 s'étendant longitudinalement entre une face arrière 36 et une face avant 38 des montants 28.

Chaque montant 28 comprend des alvéoles borgnes inversées comprenant des premières alvéoles 32 borgnes, fermées du côté de la face arrière 36 et ouvertes du côté de la face avant 38, et des deuxièmes alvéoles 34 borgnes ouvertes du côté de la face arrière 36 et fermées du côté de la face avant 28. Les premières alvéoles 32 et les deuxièmes alvéoles 34 sont disposées en quinconce (ou damier).

Chaque montant 28 est fixé directement sur la platine 20 correspondante, en contact et en appui longitudinal rigide contre sur la platine 20. Chaque montant 28 recouvre la majeure partie de la surface d'appui offerte par la platine 20 correspondante.

Chaque montant 28 est fixé sur la platine 20 correspondante par vissage ou par collage.

Cette deuxième solution est avantageuse, dans la mesure où elle permet une bonne répartition des efforts. En effet, les contraintes de design liées à l'assemblage par vissage (insert métalliques, trous, semelles de rigidification, espaces pour les visseuses...) sont levées, tandis que les contraintes localisées et les risques d'arrachement causés par le vissage sont très fortement atténués. En outre, la géométrie choisie formée d'alvéoles borgnes inversées disposés en quinconces augmente considérablement la surface d'encollage à l'arrière des montants 28 et participe à la répartition favorable des efforts.

Les platines 20 de grande hauteur, ou platine géantes, raccordant chaque longeron supérieur 12 à un longeron inférieur 16, permet de répartir la distribution des efforts encaissés par le bouclier 8 sur une hauteur importante dans le véhicule, grâce aux montants 28 s'étendant entre les voies haute et basse.

Les platines 20 géantes offrent une surface d'appui rigide étendue aux montants 28, ce qui permet aux montants 28 de travailler uniformément en compression en cas de choc, sans flexion dans leur partie médiane située verticalement entre la vois haute 10 et la voie basse 14. Cet atout permet une conception homogène des montants 28, possédant des alvéoles analogues uniformément réparties, démoulables longitudinalement et destinées à travailler essentiellement en compression. L'architecture diffère donc radicalement des structures dépourvues de platines géantes, dont les montants doivent présenter un design destiné à un travail en flexion.

De ce fait, le véhicule muni d'un ensemble avant selon l'invention est moins intrusif lorsqu'il entre en contact avec un autre véhicule, ce qui bénéficie à la compatibilité inter-véhiculaire à basse et moyenne vitesse.

La dimension de l'appui offert par les platines 20 est avantageusement comprise entre 100 et 180 mm en largeur, et entre 350 et 450mm en hauteur, ce qui correspond à des aires globalement comprises entre 3,5 et 8 dm².

La structure alvéolaire des montants 28 facilite la fabrication et confère aux montants une capacité d'absorption d'énergie suffisante sur une profondeur (dimension suivant la direction longitudinale) faible.

Le cadre 22 est obtenu d'un seul bloc par exemple par moulage par injection de matière plastique. Il peut être démoulé suivant une unique direction correspondant à la direction longitudinale du véhicule automobile lorsque le bouclier 8 est fixé sur le châssis 4. Ainsi, le cadre 22 peut être obtenu de façon simple, avec un coût de fabrication faible. La structure alvéolaire des montants 28 permet des dépouilles faibles, voire nulles, ce qui limite le poids et le coût de fabrication du bouclier 8. Les pièces obtenues sont donc légères et présentent une économie de matière.

La structure alvéolaire des montants permet également de réduire les épaisseurs locales de parois délimitant les alvéoles 32, 34. Ainsi, cette épaisseur locale peut être réduite dans une gamme comprise entre 2,5 et 4 mm, avantageusement comprise entre 3 mm et 3,5 mm.

En outre, et d'une manière générale, le démoulage du bouclier monobloc 8 est facilité puisque les faibles dépouilles ou leur absence permet un démoulage par mouvement de deux demi-moules opposées dans des sens opposés le long d'un axe correspondant à l'axe longitudinal du véhicule. Ainsi, il n'est pas nécessaire de prévoir des tiroirs ou des parties mobiles dans le moule.

En outre, les dépouilles faibles voir nulles dans les montants 28 en damier permet d'obtenir une raideur uniforme lors d'un enfoncement longitudinal, par exemple lors d'un choc à moyenne vitesse. Ainsi, il est possible d'obtenir un palier d'effort sensiblement constant en fonction du déplacement, ce qui augmente l'énergie dissipée et diminue la course d'absorption, tout en restant sous la force de tarage des longerons 12, 16 définie plus haut.

Il en résulte que l'énergie d'un choc peut être dissipée moyennant une course réduite, et que la solution s'avère très compacte. Cette solution est donc particulièrement adaptée aux véhicules de faible cylindré présentant une course longitudinale d'absorption de choc inférieure à 250 mm, et notamment inférieure à 200 mm. Les montants 28 présentent une épaisseur longitudinale comprise entre 120 et 220 mm. Ceci permet une absorption d'énergie efficace, tout en limitant le porte-à-faux du bouclier 8 pris entre les platines 20 et l'extrémité avant du bouclier 8.

Par ailleurs, en choc piéton décalé latéralement, pour des distances situées notamment à plus de 300 mm du centre des membrures 30, la réduction de la décélération se fait de préférence par compression pure, très localisée, des montants 28 en damier sur une course d'environ 50 mm.

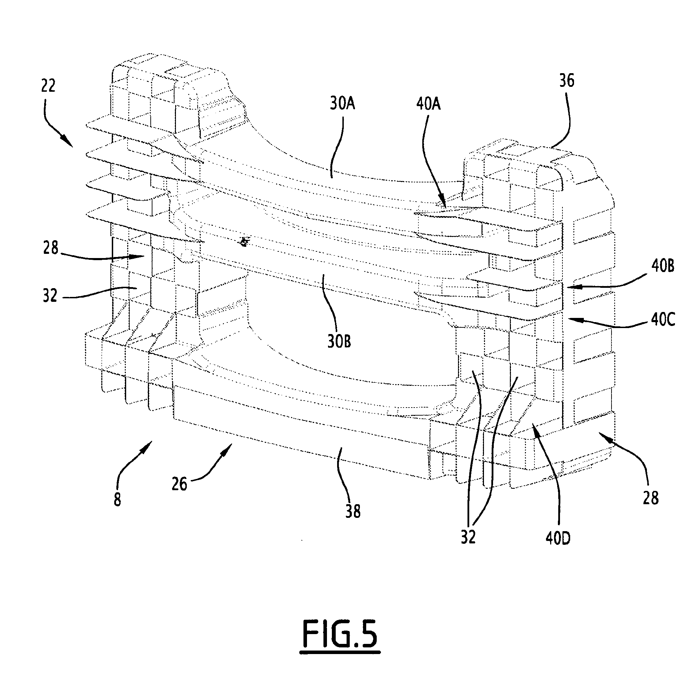

En option, l'absorption d'énergie en choc piéton peut être assurée par un ensemble de nervures 40A, 40B, 40C, 40D venues de matière avec le bouclier 8 faisant saillie vers l'avant à partir des montants 28, comme représenté sur la figure 5. Ces nervures 40A, 40B, 40C, 40D remplissent l'espace entre la peau 9 et les montants 28.

Elles sont relativement souples pour s'écraser longitudinalement plus facilement que les montants 28. Elles définissent ainsi une première zone d'absorption d'énergie plus souple à l'avant de chaque montant 28 plus rigide. Elles permettent ainsi d'absorber l'énergie d'un choc piéton sur une course proche de 50mm, en demeurant en dessous de 150 g de décélération.

Les nervures 40A, 40B, 40C, 40D ont par exemple une épaisseur verticale faible (<3mm) de façon à présenter une souplesse adéquate.

Tel que représenté sur la figure 5, le bouclier 8 comprend des nervures supérieures 40A à hauteur de la membrure supérieure 30A, des nervures intermédiaires 40B, des nervures 40C à hauteur de la membrure inférieure 30B et des nervures inférieures 40D.

Les nervures 40A à 40C font saillie longitudinalement et sensiblement horizontalement à l'avant de la face avant 38 de chaque montant 28, sur toute la largeur du montant 28.

Les nervures supérieures 40A se prolongent latéralement vers le centre de la membrure 30 pour s'appliquer sur la surface avant de la membrure supérieure 30A et les nervures 40C se prolongent latéralement vers le centre de la membrure 30B pour s'appliquer sur la surface avant de la membrure inférieure 30B.

Les membrures intermédiaires 40B sont disposées entre la membrure supérieure 30A et la membrure inférieure 30B.

Les membrures inférieures 40D font saillie verticalement à l'avant des montants dans une région des montants située juste au dessus de la poutre inférieure 26.

Ces nervures avant 40A à 40D permettent de définir des zones d'absorption d'énergie souple en avant des régions latérales des membrures 30A, 30B et des montants 28 plus rigides, afin que lors d'un choc piéton médian ou latéral, la décélération demeure inférieure à la norme.

Dans des variantes, le bouclier monobloc 8 porte des blocs optiques additionnels (non représentés), des éléments (non représentés) de fixation de panneaux de la peau du bouclier, des éléments de fixation (non représentés) d'une calandre, ou des volets pilotés permettant d'être disposés derrière la calandre pour guider l'air de façon optimale.

## Revendications

1. Ensemble avant de véhicule automobile, du type comprenant au moins deux paires de longerons (12, 16) avant d'un châssis (4) d'un véhicule automobile (2) et des platines (20) d'appui et de fixation disposées aux extrémités avant des longerons (12, 16), **caractérisé en ce qu'**il comprend un bouclier (8) pare-chocs avant comprenant un cadre (22) monobloc en matière plastique formé d'une poutre pare-chocs supérieure (24) et d'une poutre pare-chocs inférieure (26) et de deux montants (28) reliant les poutres pare-chocs supérieure (24) et inférieure (26), les montants (28) du cadre (22) étant configurés pour faire office d'absorbeurs de chocs et fixés en appui directement contre les platines (20).

2. Ensemble avant selon la revendication 1, dans lequel les montants (28) possèdent une épaisseur comprise entre 120 et 220 mm.

3. Ensemble avant selon la revendication 1 ou 2, dans lequel les montants sont fixés aux platines (20) par vissage et/ou collage.

4. Ensemble selon l'une quelconque des revendications précédentes, dans lequel les montants (28) présentent une structure alvéolaire formée d'alvéoles s'étendant longitudinalement au travers des montants (28) et débouchant sur la face arrière et/ou avant du bouclier.

5. Ensemble selon la revendication 6, dans lequel chaque montant (28) comprend des premières alvéoles (32) borgnes, fermées du côté de la face arrière (36) et ouvertes du côté de la face avant (38), et des deuxième alvéoles (34) borgnes ouvertes du côté de la face arrière (36) et fermée du côté de la face avant (28).

6. Ensemble selon l'une quelconque des revendications précédentes, dans lequel la poutre pare-chocs supérieure (24) est double et comprend deux traverses (30) espacées verticalement.

7. Ensemble selon l'une quelconques des revendications précédentes, **caractérisé en ce que** chaque paire de longerons (12, 16) comprend un longeron supérieur (12) et un longeron inférieur (16) raccordés entre eux par une platine commune de fixation (20) s'étendant sur toute la hauteur séparant le longeron supérieur (12) du longeron inférieur (16), chaque montant (28) étant appliqué sur la platine commune (20) suivant sensiblement toute sa hauteur.

8. Ensemble selon l'une quelconques des revendications précédentes, **caractérisé en ce qu'**il comprend au moins une nervure avant d'absorption piéton (40A à 40D) faisant saillie vers l'avant à partir d'un montant (28).

9. Ensemble selon la revendication 8, **caractérisé en ce qu'**une nervure avant d'absorption piéton (40A, 40C) se prolonge latéralement pour s'appliquer sur l'une de la poutre pare-chocs supérieure (24) et de la poutre pare-chocs inférieure (26).

10. Bouclier pare-chocs avant pour véhicule automobile, du type comprenant un cadre (22) monobloc formé d'une poutre pare-chocs supérieure (24) et d'une poutre pare-chocs inférieure (26) et de deux montants (28) reliant les poutres pare-chocs supérieure (24) et inférieure (26), **caractérisé en ce qu'**il est prévu pour être intégré dans un ensemble avant de véhicule automobile selon l'une quelconque des revendications précédentes, les montants (28) du bouclier étant configurés pour faire office d'absorbeurs de chocs et adaptés pour être fixés en appui directement contre les platines (20).

## Claims

1. Front assembly for a motor vehicle, of the type comprising at least two pairs of front side members (12, 16) of a chassis (4) of a motor vehicle (2) and abutment and fixing plates (20) arranged at the front ends of the side members (12, 16), **characterised in that** it comprises a front bumper shield (8) comprising a one-piece frame (22) of plastics material formed by an upper bumper beam (24) and a lower bumper beam (26) and by two uprights (28) connecting the upper (24) and lower (26) bumper beams, the uprights (28) of the frame (22) being arranged to act as impact absorbers and being fixed in abutment directly against the plates (20).

2. Front assembly according to claim 1, wherein the uprights (28) have a thickness of between 120 and 220 mm inclusive.

3. Front assembly according to claim 1 or 2, wherein the uprights are fixed to the plates (20) by screw-fixing and/or adhesive bonding.

4. Assembly according to any one of the preceding claims, wherein the uprights (28) have a cellular structure formed by cells extending longitudinally through the uprights (28) and opening out at the rear face and/or front face of the shield.

5. Assembly according to claim 6, wherein each upright (28) comprises first blind cells (32), closed to the rear face (36) and open to the front face (38), and second blind cells (34), open to the rear face (36) and closed to the front face (28).

6. Assembly according to any one of the preceding claims, wherein the upper bumper beam (24) is double and comprises two cross members (30) spaced apart vertically.

7. Assembly according to any one of the preceding claims, **characterised in that** each pair of side members (12, 16) comprises an upper side member (12) and a lower side member (16) interconnected by a common fixing plate (20) extending over the entire height separating the upper side member (12) from the lower side member (16), each upright (28) lying against the common plate (20) over substantially its entire height.

8. Assembly according to any one of the preceding claims, **characterised in that** it comprises, projecting forwards from an upright (28), at least one front absorption rib for pedestrians (40A to 40D).

9. Assembly according to claim 8, **characterised in that** a front absorption rib for pedestrians (40A, 40C) is extended laterally to lie against one of the upper (24) and lower (26) bumper beams.

10. Front bumper shield for a motor vehicle, of the type comprising a one-piece frame (22) formed by an upper bumper beam (24) and a lower bumper beam (26) and by two uprights (28) connecting the upper (24) and lower (26) bumper beams, **characterised in that** it is provided for integration in a front assembly for a motor vehicle, according to any one of the preceding claims, the uprights (28) of the shield being arranged to act as impact absorbers and being arranged to be fixed in abutment directly against the plates (20).

## Patentansprüche

1. Frontbaugruppe eines Kraftfahrzeugs, von der Bauart, die mindestens zwei vordere Längsträgerpaare (12, 16) eines Fahrgestells (4) eines Kraftfahrzeugs (2) und Anlage- und Befestigungsplatten (20) aufweist, die an den vorderen Enden der Längsträger (12, 16) angeordnet sind, **dadurch gekennzeichnet, dass** sie eine vordere Stoßfängerabschirmung (8) mit einem aus einem Teil bestehenden Rahmen (22) aus Kunststoff umfasst, der aus einem oberen Stoßfängerträger (24) und einem unteren Stoßfängerträger (26) und zwei Streben (28) gebildet ist, die den oberen Stoßfängerträger (24) und den unteren Stoßfängerträger (26) miteinander verbinden, wobei die Streben (28) des Rahmens (22) dazu ausgelegt sind, als Stoßdämpfer zu dienen und in direkter Anlage an den Platten (20) befestigt sind.

2. Baugruppe nach Anspruch 1, wobei die Streben (28) eine Dicke von 120 bis 220 mm besitzen.

3. Baugruppe nach Anspruch 1 oder 2, wobei die Streben durch Anschrauben und/oder Ankleben an den Platten (20) befestigt sind.

4. Baugruppe nach einem der vorhergehenden Ansprüche, wobei die Streben (28) eine Zellenstruktur aufweisen, die aus Zellen gebildet ist, die sich der Länge nach quer zu den Streben (28) erstrecken und an der Rückseite und/oder Vorderseite der Abschirmung münden.

5. Baugruppe nach Anspruch 6, wobei jede Strebe (28) erste Blindzellen (32), die auf der Seite der Rückseite (36) geschlossen und auf der Seite der Vorderseite (38) offen sind, und zweite Blindzellen (34) umfasst, die auf der Seite der Rückseite (36) offen und auf der Seite der Vorderseite (38) geschlossen sind.

6. Baugruppe nach einem der vorhergehenden Ansprüche, wobei der obere Stoßfängerträger (24) doppelt ist und zwei vertikal beabstandete Querträger (30) umfasst.

7. Baugruppe nach einem der vorhergehenden Ansprüche, **dadurch gekennzeichnet, dass** jedes Längsträgerpaar (12, 16) einen oberen Längsträger (12) und einen unteren Längsträger (16) umfasst, die untereinander durch eine gemeinsame Befestigungsplatte (20) verbunden sind, die sich über die gesamte Höhe erstreckt, die den oberen Längsträger (12) vom unteren Längsträger (16) trennt, wobei jede Strebe (28) im Wesentlichen entlang ihrer gesamten Höhe an der gemeinsamen Platte (20) anliegt.

8. Baugruppe nach einem der vorhergehenden Ansprüche, **dadurch gekennzeichnet, dass** sie mindestens eine vordere Fußgängeraufprallschutzrippe (40A bis 40D) umfasst, die ausgehend von einer Strebe (28) nach vorn vorsteht.

9. Baugruppe nach Anspruch 8, **dadurch gekennzeichnet, dass** eine vordere Fußgängeraufprallschutzrippe (40A, 40C) seitlich verlängert ist, um sich an den oberen Stoßfängerträger (24) oder unteren Stoßfängerträger (26) anzulegen.

10. Vordere Stoßfängerabschirmung für ein Kraftfahrzeug, von der Bauart mit einem aus einem Teil bestehenden Rahmen (22), der aus einem oberen Stoßfängerträger (24) und einem unteren Stoßfängerträger (26) und zwei Streben (28) gebildet ist, die den oberen Stoßfängerträger (24) und den unteren Stoßfängerträger (26) miteinander verbinden, **dadurch gekennzeichnet, dass** sie dazu vorgesehen ist, in eine Frontbaugruppe des Kraftfahrzeugs nach einem der vorhergehenden Ansprüche integriert zu sein, wobei die Streben (28) der Abschirmung dazu ausgelegt sind, als Stoßdämpfer zu dienen und in direkter Anlage an den Platten (20) befestigt sind.
